# EUROPÄISCHE PATENTSCHRIFT

(11) **EP 0 637 526 B1**
(45) Veröffentlichungstag und Bekanntmachung des Hinweises auf die Patenterteilung: **09.10.1996**
(21) Anmeldenummer: 94111366.4
(22) Anmeldetag: 21.07.1994
(51) Int. Cl.: B60Q 3/02, B60J 3/02

(54) **Spiegel mit Beleuchtungseinrichtung insbesondere für Fahrzeuge**
Mirror with lighting for vehicle
Mirroir avec éclairage pour véhicules

(30) Priorität: 04.08.1993 DE 4326102
(43) Veröffentlichungstag der Anmeldung: 08.02.1995
(73) Patentinhaber: Gebr. Happich GmbH, D-42097 Wuppertal (DE)
(72) Erfinder: Viertel, Lothar, D-66802 Altforweiler (DE); Welter, Patrick, FR-57730 La Chambre (FR)

(56) Entgegenhaltungen:
- EP-A- 0 340 195
- EP-A- 0 462 087
- EP-A- 0 525 452
- DE-A- 4 025 862
- US-A- 4 896 136

## Beschreibung

Die Erfindung bezieht sich auf einen Spiegel mit Beleuchtungseinrichtung, insbesondere für Fahrzeuge, mit einem etwa rechteckigen wannenförmigen Gehäuse, in dem zum einen die Beleuchtungseinrichtung, die zumindest eine elektrische Lichtquelle und eine diese abdeckende Streuscheibe umfaßt und zum anderen der Spiegel, der von einem aus dem Gehäuse herausklappbaren Deckel getragen wird, angeordnet sind und wobei der Deckel sich in der Nichtgebrauchslage des Spiegels parallel zum Boden des Gehäuses erstreckt. Eine solche Vorrichtung ist aus dem Dokument EP-A-0 462 087 schon bekannt.

Spiegel mit Bleuchtungseinrichtung der genannten Art sind in den verschiedensten Ausführungsformen bekannt. Bei den herkömmlichen Ausführungsformen ist zu bemängeln, daß sie einen relativ komplizierten Aufbau aufweisen und in der Regel zu groß dimensioniert sind, um sie problemlos in einem Sonnenblendenkörper oder im Dachhimmel eines Fahrzeugs installieren zu können.

Aufgabe der vorliegenden Erfindung ist es, einen Spiegel mit Bleuchtungseinrichtung der eingangs genannten Art zu schaffen, der sich bei vergleichsweise einfachen und kostengünstigen Aufbau durch eine geringe Bauhöhe, verbesserte Gebrauchseigenschaften sowie Ausbau der Anwendungsmöglichkeiten auszeichnen soll.

Zur Lösung dieser Aufgabe ist erfindungsgemäß vorgesehen, daß eine die Deckelfläche verringende, von einem Längsrand ausgehende U-förmige Ausnehmung zum Durchlaß der den Abmessungen der Ausnehmung entsprechenden, viertelkreisförmig ausgebildeten Streuscheibe der Bleuchtungseinrichtung aufweist und mit seinem die Ausnehmung aufweisenden Randbereich am Gehäuse angelenkt ist, daß im öden des Gehäuses eine Montageöffnung für die Einzelelemente der Bleuchtungseinrichtung vorgesehen ist und daß das Gehäuse mit einer elektrischen Schaltung und einem Schalter ausgerüstet ist, der drei Schaltstellungen aufweist, um in einer ersten Position die Beleuchtung auszuschalten, in einer zweiten Position die Beleuchtung über einen Fahrzeugtürkontakt ein- oder auszuschalten und in einer dritten Position die Beleuchtung über eine Klappbewegung des den Spiegel tragenden Deckels an- oder auszuschalten.

Da die Lichtquelle nicht vom Deckel abgedeckt werden soll, wenn sich der Spiegel in der Nichtgebrauchslage befindet, kann gegenüber herkömmlichen Vorbildern beträchtlich an Bauhöhe eingespart werden, was sehr wichtig ist, weil der Trend dahin geht, die Sonnenblenden immer dünner zu gestalten und Platz zwischen Dachblech und Fahrzeughimmel einzusparen. Als Lichtquelle kann mit Vorteil zumindest eine Soffitte zum Einsatz kommen, die schon von Hause aus wenig Platz beansprucht. Ein erster besonderer Vorteil der Erfindung besteht demnach in der äußerst geringen Bauhöhe der Spiegel-Bleuchtungseinrichtung. Ein weiterer wesentlicher Vorteil der Erfindung besteht darin, daß das Gehäuse rückseitig glatt ist und auch vorderseitig keine vorstehenden Bereiche aufweist und daß das Gehäuse von vorne und hinten mit den Elementen der Beleuchtungseinrichtung bestückbar ist, was die Montage vereinfacht. Letzteres gilt auch für die Anlenkung des Deckels an der Beleuchtungsseite des Gehäuses, weil für die Anordnung der Elemente der Beleuchtungseinrichtung und für die Anordnung der Deckellagerungselemente dieselben Mittel verwendet werden können. Der Spiegel kann durch Aufklappen des Deckels benutzt werden, und zwar sowohl mit als auch ohne Beleuchtung, wobei es nur auf die jeweilige Schalterstellung ankommt. Die Beleuchtung widerum kann je nach Schalterstellung völlig ausgeschaltet oder einmal als Fahrzeuginnenraumbeleuchtung oder als Beleuchtung für die Benutzung des Spiegels auch bei Dunkelheit benutzt werden. Die Anordnung herkömmlicher Fahrzeug-Innenraumbeleuchtungen kann infolgedessen eingespart werden.

Vorteilhafte Weiterbildungen und zweckmäßige Ausgestaltungen der Erfindung sind in den Unteransprüchen angegeben.

Ein Ausführungsbeispiel der Erfindung wird im folgenden anhand der Zeichnung näher erläutert. Es zeigen:

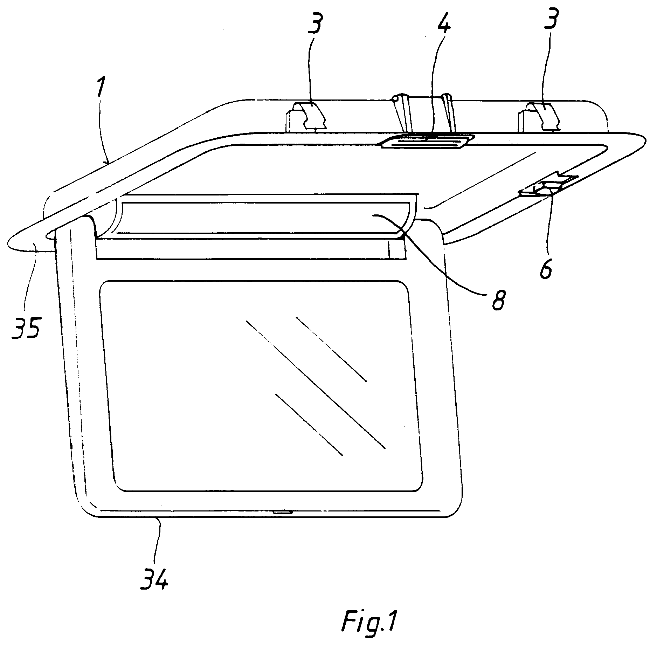

- Fig. 1: den kompletten Zusammenbau des Spiegels mit Beleuchtungseinrichtung in schaubildlicher Darstellungsmanier,

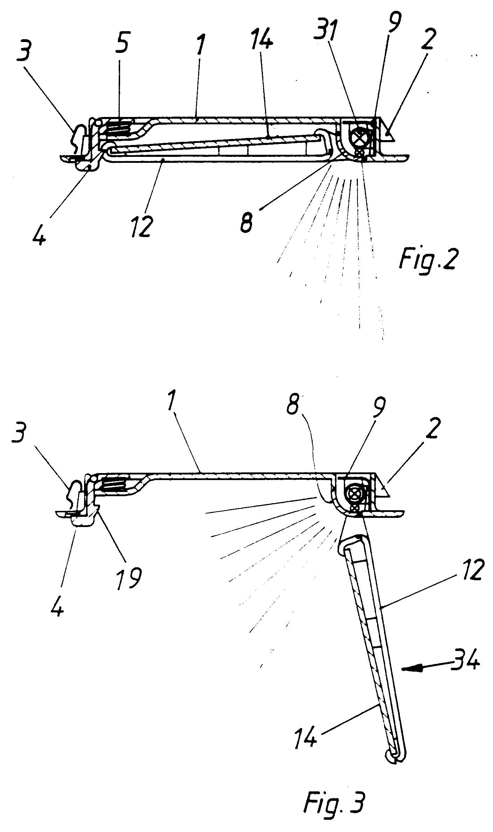

- Fig. 2: einen Schnitt durch den Zusammenbau nach Fig. 1 in der eingeklappten Nichtgebrauchslage des Spiegels,
- Fig. 3: einen Schnitt durch den Zusammenbau nach Fig. 1 in der ausgeklappten Gebrauchslage des Spiegels und
- Fig. 4: eine perspektivische Explosivdarstellung der Einzelteile des Zusammenbaus nach Fig. 1.

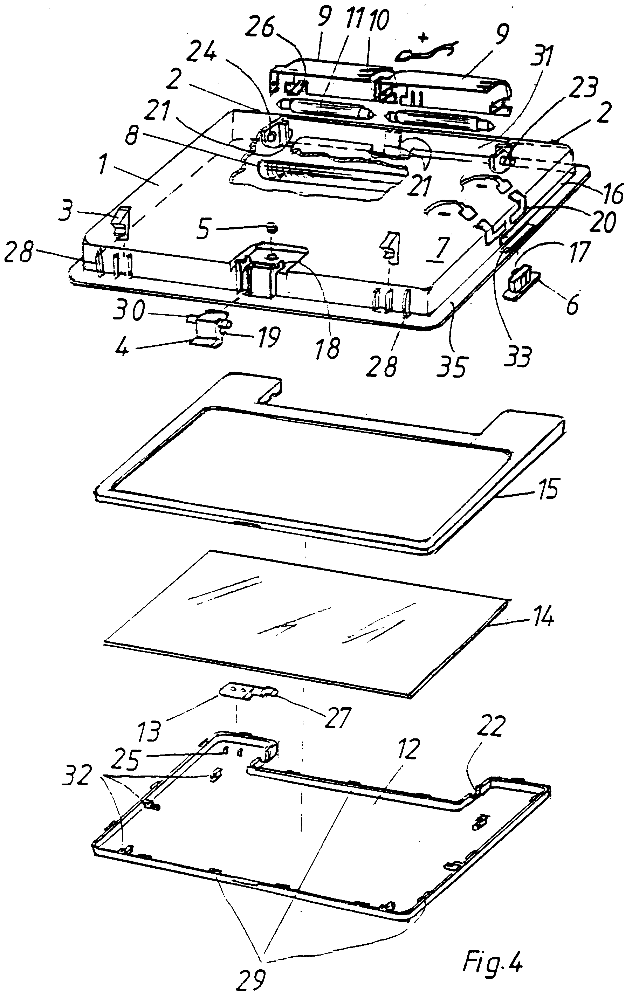

Der am besten aus Fig. 4 ersichtliche Teileaufbau des neuen Spiegels mit Beleuchtungseinrichtung umfaßt im wesentlichen: Ein etwa rechteckiges wannenförmiges Gehäuse 1 mit angebildeten Montagehaken 2 an einer Längswand des Gehäuses 1. Eine Verriegelungseinrichtung 4 (auf/zu) mit angebildeten Lagerzapfen 30, Hinterschnitt 19 und Druckfeder 5. Einen Schiebeschalter 6 mit Kontaktblech 17. Ein Kontaktband 16, ein Kontaktblech 7 und ein Kontaktblech 20. Weiterhin eine Streuscheibe 8 und zwei gleich ausgebildete Reflektoren 9 mit angeformten Aufnahmen für als Soffitten 11 (z.B. 12 V, 3 W) ausgebildete Lichtquellen sowie Steckzungen 10 für einen Kabelanschluß. Einen Deckel 34 mit Unterteil 12, daraufliegenden Spiegel 14 und Oberteil 15 als Spiegelmaske.

Beim Zusammenbau der Einzelelemente wird das Gehäuse 1 mit den beiden Montagefedern 3 bestückt. Die Verriegelungseinrichtung 4 mit den angebildeten Lagerzapfen 30 und Hinterschnitt 19 wird ins Gehäuse 1 mit der Druckfeder 5 in die dafür angeformten Lagerstellen 18 des Gehäuses 1 montiert. Die Druckfeder 5 bewirkt, däß der Haken der Verriegelungseinrichtung 4 in geschlossener Stellung verharrt und positioniert ist. An der Außenseite des Gehäuses 1 werden die Kontaktbleche 7 und 20 sowie das Kontaktband 16 montiert (gesteckt/geklemmt), von denen das Kontaktblech 20 als Masse dient. Das Kontaktblech 7 wird für den Türkontakt benutzt. Das Kontaktband 16 dient als Brücke zwischen den Kontaktblechen 7 und 20 sowie Reflektor 9, der als Lampenhalter dient.

Der Schiebeschalter 6 wird mit einem Kontaktblech 17 bestückt und komplett in den dafür vorgesehenen Aufnahmeschlitz 33 im Flansch 35 des Gehäuses 1 montiert (gesteckt/geklipst) und kann je nach Bedarf in die gewünschte Schaltposition verschoben werden.

Die beiden identischen Reflektoren mit jeweils angebildetem Kabelanschluß 10 und Soffittenaufnahmen werden von der offenen Wannenrückseite (Montageöffnung 31) in die dafür angeformten Aufnahmetaschen 21 geklemmt. Die Soffitten 11 werden dann in die angebildeten Aufnahmezungen der Reflektoren 9 gesteckt und geklemmt. In dieser Montagephase bietet sich bereits an, die Beleuchtungsfunktion zu testen (geringster Aufwand bei eventueller Fehlfunktion). Danach wird die viertelkreisförmige Lichtquellenabdeckung, in Form einer Streuscheibe 8 in die dafür am Gehäuse 1 vorgesehenen Aufnahmen eingeklipst.

Zwecks Vervollständigung kann nun das komplett vormontierte Gehäuse 1 in eine senkrechte Lage gestellt werden, um das Unterteil 12 des Deckels 34 waagerecht im Gehäuse 1 in Position zu bringen (Stellung >90^{o}). Die halbkreisförmige Ausnehmung 22 im Unterteil 12 wird dem angebildeten Lagerzapfen 23 am Gehäuse 1 zugeführt und eingelegt. In dieser Motagestellung des Unterteils 12 kann der Lagerzapfen 13 mit exzentrischer Zapfenanbildung 27 in die Lochöffnung 24 des Gehäuses 1 eingeführt und gleichzeitig auf die Steckzapfen 25 am Unterteil 12 aufgepreßt werden.

Der Exzenter 27 des Lagerzapfens 13 dient bzw. bewirkt, daß in einer >90^{o} Stellung des Deckels 34 ein Bremsmoment erzeugt wird, weil der Exzenter 27 in dieser Deckelstellung auf die am Reflektor ausgebildete Federzunge 26 schleift und drückt.

Der Spiegel 14 wird in das Unterteil 12 eingelegt und durch die dafür angebildeten Auflage- und Distanzstücke 32 positioniert. Das Oberteil 15 wird bündig auf das Unterteil 12 und Spiegel 14 aufgelegt und in der Montagestellung mit den ausgebildeten Verschmelzungsteilen 29 Ultraschall verschweißt. Hiernach sind die Drehlagerstellen komplett gebildet und verriegelt sowie der Spiegel 14 klapperfrei fixiert.

Der beschriebene Spiegel mit Beleuchtungseinrichtung ist insbesondere zum Einbau in Fahrzeugsonnenblenden und Dachhimmeln von Fahrzeugen geeignet.

## Patentansprüche

1. Spiegel mit Beleuchtungseinrichtung, insbesondere für Fahrzeuge, mit einem etwa rechteckigen wannenförmigen Gehäuse (1), in dem zum einen die Beleuchtungseinrichtung, die zumindest eine elektrische Lichtquelle und eine diese abdeckende Streuscheibe (8) umfaßt und zum anderen der Spiegel (14), der von einem aus dem Gehäuse (1) herausklappbaren Deckel (34) getragen wird, angeordnet sind, und wobei der Deckel (34) sich in der Nichtgebrauchslage des Spiegels (14) parallel zum Boden des Gehäuses (1) erstreckt, dadurch gekennzeichnet, daß eine die Deckelfläche verringernde, von einem Längsrand ausgehende U-förmige Ausnehmung zum Durchlaß der den Abmessungen der Ausnehmung entsprechenden, viertelkreisförmig ausgebildeten Streuscheibe (8) der Beleuchtungseinrichtung aufweist und mit seinem die Ausnehmung aufweisenden Randbereich am Gehäuse (1) angelenkt ist, daß im Boden des Gehäuses (1) eine Montageöffnung (31) für die Einzelelemente der Beleuchtungseinrichtung vorgesehen ist und daß das Gehäuse (1) mit einer elektrischen Schaltung und einem Schalter (6) ausgerüstet ist, der drei Schaltstellungen aufweist, um in einer ersten Position die Beleuchtung auszuschalten, in einer zweiten Position die Beleuchtung über einen Fahrzeugtürkontakt ein- oder auszuschalten und in einer dritten Position die Beleuchtung über eine Klappbewegung des den Spiegel (14) tragenden Deckels (34) an- oder auszuschalten.

2. Spiegel nach Anspruch 1, dadurch gekennzeichnet, daß der Deckel (34) aus einem Unterteil (12) und einem damit übereinstimmenden, eine Fensteröffnung für den Spiegel (14) aufweisenden Oberteil (15) besteht und an den gegenüberliegenden Wänden der U-förmigen Ausnehmung Lageröffnungen (22) zur Aufnahme von die Klappachse bildenden Lagerzapfen (13, 23) aufweist, die am Gehäuse (1) angeordnet sind.

3. Spiegel nach Anspruch 1 oder 2, dadurch gekennzeichnet, daß einer der Lagerzapfen (13) für den Deckel (34) eine exzentrische Zapfenanbindung (27) aufweist, die in Anlageberührung mit einer Federzunge (26) steht.

4. Spiegel nach wenigstens einem der Ansprüche 1 bis 3, dadurch gekennzeichnet, daß das Gehäuse (1) an der der Anlenkung des Deckels (34) abgewandten Seite eine federbelastete Verriegelungseinrichtung (4) für den Deckel (34) trägt.

5. Spiegel nach wenigstens einem der Ansprüche 1 bis 4, dadurch gekennzeichnet, daß das Gehäuse (1) am freien Rand mit einem umlaufenden, parallel zum Boden ausgerichteten Flansch (35) ausgebildet ist und an einer Längswand nach außen überstehende Montagehaken (2) und an der gegenüberliegenden Längswand nach außen überstehende Montagefedern (3) aufweist.

6. Spiegel nach wenigstens einem der Ansprüche 1 bis 5, dadurch gekennzeichnet, daß der Flansch (35) einen Aufnahmeschlitz (33) für den Schalter (6) aufweist.

7. Spiegel nach wenigstens einem der Ansprüche 1 bis 6, dadurch gekennzeichnet, daß im Bereich der Montageöffnung (31) des Gehäuses (1) Haltelaschen (21) für Elemente der Beleuchtungseinrichtung und Lagerlaschen für die Anlenkung des Deckels (34) am Gehäuse (1) angeordnet sind.

8. Spiegel nach wenigstens einem der Ansprüche 1 bis 7, dadurch gekennzeichnet, daß das Gehäuse (1) und der Deckel (34) als Kunststoff-Spritzgußteile ausgebildet sind.

9. Spiegel nach wenigstens einem der Ansprüche 1 bis 8, dadurch gekennzeichnet, daß derselbe in einer im Dachhimmel oder in einer Sonnenblende eines Fahrzeugs ausgebildeten Montageöffnung anordbar ist.

## Claims

1. A mirror with an illumination device, particularly for vehicles, comprising a trough-like approximately rectangular housing (1), in which are provided on the one hand the illumination device comprising at least an electric light source and a diffusion plate (8) for covering the light source and on the other hand the mirror (14) which is supported by a cover (34) which can be tilted out from the housing (1) and wherein the cover (34) extends in the position of non-use of the mirror (14) in a direction parallel to the base of the housing (1), characterized in that an U-shaped recess which reduces the surface of the cover and which departs from a longitudinal edge, which recess is provided for the passage of the quarter-circular diffusion plate (8) of the illumination device, whose dimensions correspond to those of the aperture and which is linked with its recessed border on the housing (1), in that in the base of the housing (1) there is provided an assembly opening (31) for the individual components of the illumination device and in that the housing (1) is provided with an electrical circuit and a switch (6) with three switching positions, in order to switch off the illumination device in a first position, to switch on or off the illumination device by means of a door-contact in a second position, and to switch on or off the illumination device by means of a tilting movement of the cover (34) which supports the mirror (14) in a third position.

2. A mirror according to claim 1, characterized in that the cover (34) comprises a lower part (12) and an upper part (15) which corresponds to the lower part and is provided with a window opening for the mirror (14) and on the opposed walls of the U-shaped recess bearing openings (22) in order to accommodate support pins (13, 23) which form the tilting axle and which are provided on the housing (1).

3. A mirror according to claim 1 or 2, characterized in that one of the support pins (13) for the cover (34) comprises an eccentric pin holder (27), which is in contact with an elastic tab (26).

4. A mirror according to at least one of the preceding claims 1 to 3, characterized in that the housing (1) supports a spring loaded locking device (4) for the cover (34) on the side opposed to the link of the cover (34).

5. A mirror according to at least one of the preceding claims 1 to 4, characterized in that the housing (1) comprises on the free border a circular flange (35), which is parallel to the base and on a longitudinal wall is provided with outward protruding assembly hooks and on the facing longitudinal wall outward protruding assembly springs (3).

6. A mirror according to at least one of the preceding claims 1 to 5, characterized in that the flange (35) is provided with a insertion slit (33) for the switch (6).

7. A mirror according to at least one of the preceding claims 1 to 6, characterized in that near the assembly opening (31) of the housing (1) there are provided holding limbs (21) for elements of the illumination device and support limbs for linking the cover (34) on the housing (1).

8. A mirror according to at least one of the preceding claims 1 to 7, characterized in that the housing (1) and the cover (34) are injection molded plastic parts.

9. A mirror according to at least one of the preceding claims 1 to 8, characterized in that the same can be positioned in a recess provided in the roof or in a sun visor of a vehicle.

## Revendications

1. Miroir pourvu de dispositif d'éclairage, notamment pour véhicules, comportant un boîtier (1) sensiblement rectangulaire et en forme de cuvette et dans lequel sont disposés le dispositif d'éclairage comprenant au moins une source électrique de lumière et un disque de diffusion (9) couvrant cette dernière, et le miroir (14), ce dernier étant supporté par un couvercle (34) relevable vers l'extérieur du boîtier (1), le couvercle (34) à la position de non utilisation du miroir (14) s'étendant parallèlement au fond du boîtier (1), caractérisé en ce que le couvercle (34) présente un évidement en forme de "U", s'étendant à partir d'une bordure longitudinale et réduisant la surface du couvercle, pour le passage du disque de diffusion (8), correspondant aux dimensions de l'évidement et conformé en forme d'un quart de cercle, du dispositif d'éclairage, et qu'il est articulé sur le boîtier (1) par sa zone de bordure présentant l'évidement, en ce qu'au fond du boîtier (1) il est prévu une ouverture de montage (31) pour les éléments individuels du dispositif d'éclairage, et en ce que le boîtier (1) est équipé d'une connexion électrique et d'un commutateur (6), lequel présente trois positions de commande, une première position pour débrancher l'éclairage, une deuxième position pour brancher ou débrancher l'éclairage par l'intermédiaire d'un contact de la portière du véhicule et une troisième position pour brancher ou débrancher l'éclairage par un mouvement de relevage du couvercle (34) portant le miroir (14).

2. Miroir selon la revendication 1, caractérisé en ce que le couvercle (34) est formé d'une partie inférieure (12) et d'une partie supérieure (15) épousant la forme de la partie inférieure et présentant une ouverture en guise de fenêtre pour le miroir (14), et qu'il présente sur les parois opposées de l'évidement en forme de "U", des ouvertures d'appui (22) pour recevoir des pivots supports (13, 23) qui forment l'axe de relevage et sont disposés sur le boîtier (1).

3. Miroir selon la revendication 1 ou 2, caractérisé en ce que l'un des pivots supports (13) présente une attache excentrique de pivot (27) pour le couvercle (34), cette attache étant en contact d'appui avec une languette de ressort (26).

4. Miroir selon au moins l'une des revendications 1 à 3, caractérisé en ce que du côté opposé à l'articulation du couvercle (34), le boîtier (1) porte un dispositif de verrouillage soumis à l'action d'un ressort pour le couvercle (34).

5. Miroir selon au moins l'une des revendications 1 à 4, caractérisé en ce que le boîtier (1) prévoit, sur sa bordure libre, une bride périmétrique (35) orientée parallèlement au fond et présente, sur une paroi longitudinale, des crochets de montage (2) faisant saillie vers l'extérieur et, sur une paroi longitudinale en regard, des ressorts de montage (3) faisant saillie vers l'extérieur.

6. Miroir selon au moins l'une des revendications 1 à 5, caractérisé en ce que la bride (35) présente une fente de réception (33) pour le commutateur (6).

7. Miroir selon au moins l'une des revendications 1 à 6, caractérisé en ce que dans la zone de l'ouverture de montage (31) du boîtier (1) sont disposées des languettes de retenue (21) pour des éléments du dispositif d'éclairage et des languettes d'appui pour l'articulation du couvercle (34) sur le boîtier (1).

8. Miroir selon au moins l'une des revendications 1 à 7, caractérisé en ce que le boîtier (1) et le couvercle (34) sont réalises en forme de pièces en matière synthétique moulées par injection.

9. Miroir selon au moins l'une des revendications 1 à 8, caractérisé en ce qu'il est adapté à être disposé dans une ouverture de montage dans le toit ou dans le paresoleil d'un véhicule.
